Europäisches Patentamt

European Patent Office

Office européen des brevets

(19)

(11) Numéro de publication: **0 378 949**

**A1**

# (12) DEMANDE DE BREVET EUROPEEN

(21) Numéro de dépôt: **89403639.1**

(22) Date de dépôt: **22.12.89**

(51) Int. Cl.⁵: **B60G 17/005**

(30) Priorité: **16.01.89 FR 8900433**

(43) Date de publication de la demande:
**25.07.90 Bulletin 90/30**

(84) Etats contractants désignés:
**BE DE ES FR GB IT LU NL**

(71) Demandeur: **S.E.S.R. - SOCIETE EUROPEENNE DE SEMI-REMORQUES**
**44, rue François 1er**
**F-75008 Paris(FR)**

(72) Inventeur: **Larchet, Pierre**
**19, rue Saint Livier**
**F-54130 Saint Max(FR)**
Inventeur: **Leger, Michel**
**8, rue Pacatte Bat les Chataigners**
**F-54300 Luneville(FR)**

(74) Mandataire: **Kügele, Bernhard et al**
**NOVAPAT FRANCE 63 bis, boulevard Bessières**
**F-75017 Paris(FR)**

(54) **Dispositif de blocage en hauteur de suspension pneumatique pour véhicule industriel.**

(57) Ce dispositif de blocage d'un système de suspension pneumatique du type à soufflets comprend un vérin hydraulique (1) disposé axialement à l'intérieur de deux des soufflets (2) de la suspension, entre les points d'appui de ceux-ci entre un essieu (15) et le châssis (11), de chaque côté de celui-ci. Ledit vérin (1) est un vérin hydraulique à simple effet relié à un réservoir de fluide sous une faible pression par l'intermédiaire d'un distributeur à tiroir adapté pour prendre sélectivement une première position dans laquelle il assure ladite liaison par l'intermédiaire d'un clapet anti-retour permettant seulement l'échappement du vérin, une seconde position dans laquelle il assure ladite liaison directement et librement, et une troisième position dans laquelle ledit vérin est isolé dudit réservoir.

FIG.2

EP 0 378 949 A1

## Dispositif de blocage en hauteur de suspension pneumatique pour véhicule industriel

La présente invention concerne d'une façon générale les systèmes de suspensions pneumatiques pour véhicules industriels, et elle est plus particulièrement relative à un dispositif de blocage en hauteur pour une telle suspension.

La plupart des véhicules industriels : camions, remorques et semi-remorques poids lourds sont actuellement équipés de suspensions pneumatiques, qui se sont révélées apporter de nombreux avantages, parmi lesquels on peut citer une très grande souplesse pouvant s'adapter en fonction de la charge, le confort pour la marchandise transportée et pour le chauffeur et une tenue de route améliorée.

Le plus répandu de ces systèmes comporte des soufflets alimentés par une centrale de production d'air comprimé du véhicule.

On a cependant remarqué que la grande souplesse de ces suspensions pouvait présenter un important inconvénient lors des manoeuvres de chargement et de déchargement.

En effet, la variation brutale de la charge, par exemple lorsqu'un chariot à fourche entre dans le véhicule ou en sort chargé, provoque également une variation brusque de la hauteur qui peut être dangereuse.

En outre, si lors du chargement la réserve d'air comprimé du véhicule est insuffisante pour compenser l'abaissement de la caisse, la différence avec le niveau de chargement peut empêcher celui-ci.

Pour remédier à cet inconvénient on utilise habituellement des béquilles rétractables hydrauliques, dont l'actionnement nécessite un groupe électro-hydraulique, lourd et onéreux, ou une pompe à main, qui est incommode.

L'invention a pour but de supprimer les inconvénients des systèmes de suspensions pneumatiques actuels et des moyens utilisés jusqu'à présent pour y remédier.

Elle a pour objet à cet effet un dispositif de blocage en hauteur d'un système de suspension pneumatique du type à soufflets pour véhicules industriels poids lourds, caractérisé en ce qu'il comprend un vérin hydraulique disposé axialement à l'intérieur de deux des soufflets de la suspension, entre les points d'appui de ceux-ci.

La description qui va suivre, en regard des dessins annexés à titre d'exemples non limitatifs, permettra de bien comprendre comment l'invention peut être mise en pratique.

La figure 1 est une vue schématique générale du dispositif suivant l'invention.

La figure 2 montre l'agencement d'un vérin à l'intérieur de l'un des soufflets de la suspension.

En se référant aux dessins, le dispositif suivant l'invention comprend un vérin 1 qui est disposé axialement à l'intérieur d'un soufflet 2 du système de suspension d'un véhicule industriel (non représenté), agissant verticalement.

Le vérin 1 est un vérin hydraulique à simple effet, alimenté en fluide hydraulique par l'intermédiaire d'un tuyau 3, d'un distributeur 4 à tiroir et d'un tuyau 5 à un réservoir 6 de fluide hydraulique maintenu sous pression par un tuyau 7 relié à la centrale d'air comprimé (non représentée) du véhicule; un second tuyau 5' muni d'un clapet anti-retour relie le réservoir 6 au distributeur 4.

Le distributeur 4 est commandé par un actionneur pneumatique 8 relié à un vase de frein 9 par l'intermédiaire d'un autre distributeur à tiroir 10.

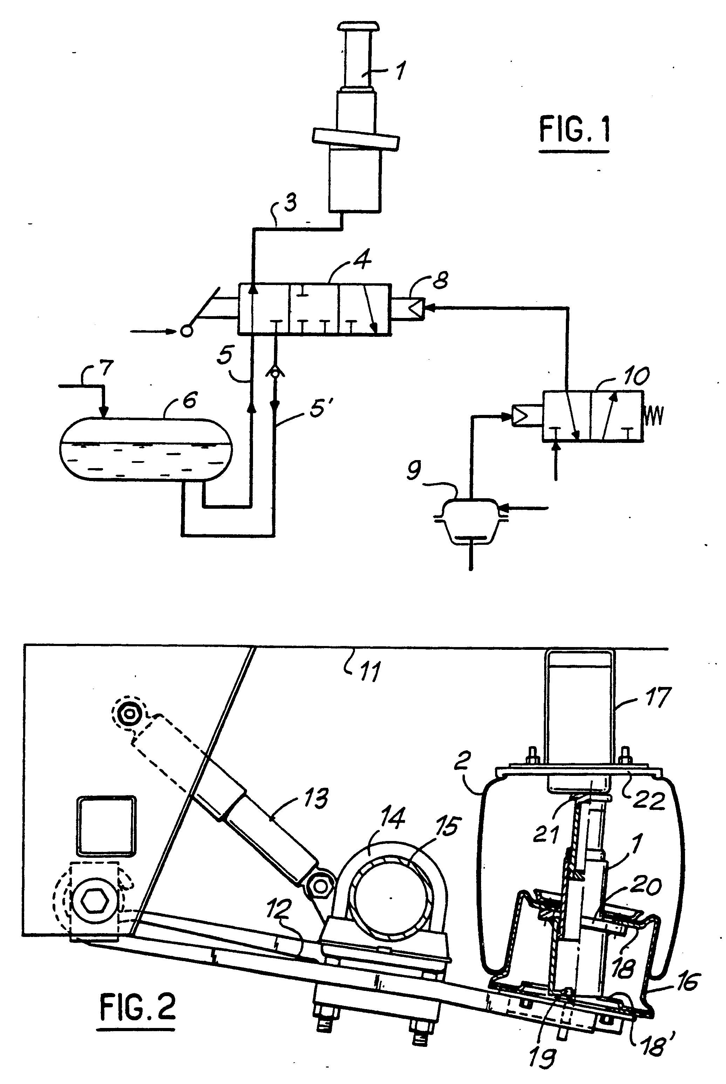

Comme représenté à la figure 2, le châssis 11 du véhicule auquel est appliquée l'invention porte un ressort à lames 12 et un amortisseur télescopique 13 qui est relié au ressort 12 par une jumelle 14 de fixation d'un essieu 15.

A son extrémité éloignée du châssis 11, le ressort 12 porte un support 16 auquel est fixée une extrémité du soufflet 2 dont l'autre extrémité est fixée à une traverse 17 du châssis.

Le support 16 présente dans son ensemble la forme d'un tambour cylindrique. Il comporte à chacune de ses extrémités une collerette radiale 18, 18' dirigée vers l'intérieur et est fixé par sa collerette inférieure 18' sur l'extrémité du ressort 12 avec son axe perpendiculaire à celui-ci.

Le soufflet 2 est un soufflet classique de suspension, de forme à peu près cylindrique, disposé à peu près verticalement et la périphérie de son extrémité inférieure est reliée de façon étanche à la périphérie de la collerette supérieure 18 du support 16.

Le vérin 1 est disposé à peu près axialement dans le support 16, avec son extrémité inférieure 19 reposant librement sur le ressort 12, dans l'ouverture délimitée par la collerette inférieure 18' et il s'étend vers le haut à travers l'ouverture délimitée par la collerette supérieure 18 du support, ouverture dans laquelle il est maintenu par une bride radiale externe 20 fixée, par exemple soudée, de façon étanche sur la surface externe du vérin dans une position légèrement inclinée, parallèlement au ressort 12, cette bride 20 étant également fixée de façon étanche à la collerette supérieure 18 du support, assurant ainsi l'étanchéité du soufflet 2.

A son extrémité supérieure 21 le vérin 1 repose en appui, librement, contre un élément métallique 22 par l'intermédiaire duquel le soufflet est fixé à la traverse 17.

On décrira maintenant le fonctionnement du dispositif suivant l'invention en se référant à la figure 1.

En position de route, le vérin ne doit pas agir sur l'élément 22, solidaire du chassis : le tiroir du distributeur 4 est alors placé de manière à relier le vérin au réservoir par l'intermédiaire du tuyau 5' et du clapet anti-retour. Ainsi, le fluide sous faible pression (environ 6 bars) du réservoir ne peut agir sur le vérin. Cependant, le débattement de la suspension peut agir sur le vérin pour le rétracter, le vérin étant calculé de manière que l'effort qu'il développe sous une pression de 6 bars soit faible par rapport aux efforts de la suspension.

Pour bloquer la suspension, on déplace tout d'abord le tiroir du distributeur 4 de manière à relier directement le vérin au réservoir 6 par l'intermédiaire du tuyau 5, et on le déplace ensuite afin d'isoler le vérin.

A titre de sécurité, afin d'éviter de faire rouler le véhicule avec la suspension bloquée, l'actionneur 8 du distributeur 4 est relié à un vase 9 du circuit de freinage par l'intermédiaire d'un distributeur 10 dont le tiroir est rappelé par un ressort, de telle sorte que, lorsque les freins sont desserrés et qu'il n'y a pas de pression dans le vase 9, le distributeur 4 relie le vérin au réservoir par l'intermédiaire du tuyau 5' et du clapet anti-retour.

L'utilisation d'un vérin simple effet peu encombrant permet de le loger à l'intérieur du soufflet.

On comprend, bien entendu, qu'il est prévu un dispositif suivant l'invention de chaque côté du châssis du véhicule.

L'invention réalise ainsi un dispositif simple et peu coûteux de blocage de la suspension pour un véhicule industriel, dont l'actionnement est simple et commode.

**Revendications**

1. Dispositif de blocage en hauteur d'un système de suspension pneumatique du type à soufflets pour véhicules industriels poids lourds, caractérisé en ce qu'il comprend un vérin hydraulique (1) disposé axialement à l'intérieur de deux des soufflets (2) de la suspension, entre les points d'appui de ceux-ci entre un essieu (15) et le châssis (11), de chaque côté de celui-ci.

2. Dispositif suivant la revendication 1, caractérisé en ce que ledit vérin (1) est un vérin hydraulique à simple effet relié à un réservoir (6) de fluide sous une faible pression par l'intermédiaire d'un distributeur (4) à tiroir adapté pour prendre sélectivement une première position dans laquelle il assure ladite liaison par l'intermédiaire d'un clapet anti-retour permettant seulement l'échappement du vérin; une seconde position dans laquelle il assure ladite liaison directement et librement; et une troisième position dans laquelle ledit vérin est isolé dudit réservoir.

3. Dispositif suivant la revendication 2, caractérisé en ce que ladite pression est de l'ordre d'environ 6 bars.

4. Dispositif suivant la revendication 2, caractérisé en ce que le distributeur (4) est relié à un élément (9) du circuit de freinage du véhicule par l'intermédiaire d'un autre distributeur à tiroir (10) adapté pour placer automatiquement le tiroir du distributeur (4) dans ladite première position.

5. Dispositif suivant la revendication 1, caractérisé en ce que ledit vérin (1) comporte une bride radiale externe (20) en un point intermédiaire de sa longueur, au moyen de laquelle il est maintenu dans un support (36) avec l'une des extrémités du soufflet (2) de façon étanche, ledit support étant lui-même solidaire d'un ressort de la suspension.

6. Dispositif suivant la revendication 5, caractérisé en ce que les extrémités dudit vérin (1) reposent en contact, librement, d'une part contre un élément solidaire du châssis, à l'intérieur dudit soufflet (2), et d'autre part contre ledit ressort (12).

FIG. 1

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A- 866 315 (GIRLING) <br> * Page 3, lignes 68-77; figures 1-7 * <br> --- | 1 | B 60 G 17/005 |
| A | US-A-4 145 073 (McLUCKIE) <br> * Page de garde; colonne 3, ligne 62 - colonne 4, ligne 5 * <br> --- | 1 | |
| A | FR-A-2 554 060 (RENAULT) <br> --- | | |
| A | DE-A-2 722 015 (TRENKAMP) <br> --- | | |
| A | CH-A- 642 597 (KUBOTA) <br> --- | | |
| A | US-A-4 375 903 (LOVELL) <br> --- | | |
| A | GB-A-2 080 213 (WABCO) <br> ----- | | |

|  |
|---|
| **DOMAINES TECHNIQUES RECHERCHES (Int. Cl.5)** |
| B 60 G <br> B 62 D <br> F 16 F |

Le présent rapport a été établi pour toutes les revendications

| Lieu de la recherche | Date d'achèvement de la recherche | Examinateur |
|---|---|---|
| LA HAYE | 02-04-1990 | ESPEEL R.P. |